# EUROPÄISCHE PATENTSCHRIFT

(11) **EP 1 639 538 B1**
(45) Veröffentlichungstag und Bekanntmachung des Hinweises auf die Patenterteilung: **14.10.2009**
(21) Anmeldenummer: 04739867.2
(22) Anmeldetag: 14.06.2004
(51) Int. Cl.: G06Q 30/00

(54) **VERFAHREN ZUR ZULASSUNG EINES INFORMATIONSANBIETERS ZU EINEM VERFAHREN ZUR VERMITTLUNG VON INFORMATIONEN UND VERMITTLUNGSEINRICHTUNG**
METHOD FOR ADMITTING AN INFORMATION PROVIDER TO A DATA TRANSMISSION PROCESS, AND TRANSMISSION DEVICE
PROCEDE POUR AGREER UN FOURNISSEUR D'INFORMATIONS POUR UN PROCEDE DE TRANSMISSION D'INFORMATIONS ET DISPOSITIF DE TRANSMISSION

(30) Priorität: 24.06.2003 DE 10328383
(43) Veröffentlichungstag der Anmeldung: 29.03.2006
(73) Patentinhaber: SIEMENS AKTIENGESELLSCHAFT, 80333 München (DE)
(72) Erfinder: SCHMIDT, Markus, 90419 Nürnberg (DE); SCHREINER, Horst, 90765 Fürth (DE); ZAHLMANN, Gudrun, 92318 Neumarkt (DE)
(86) Internationale Anmeldenummer: PCT/EP2004/006387
(87) Internationale Veröffentlichungsnummer: WO 2004/114174

(56) Entgegenhaltungen:
- WO-A-02/06990
- WO-A-97/26612
- GB-A- 2 357 675
- US-A- 5 862 223

## Beschreibung

Die Erfindung betrifft ein Verfahren zur Zulassung eines Informationsanbieters zu einem Verfahren zur Vermittlung von Informationen zwischen Informationsanbietern und Informationsnachfragern über eine Vermittlungseinrichtung. Darüber hinaus betrifft die Erfindung eine entsprechende Vermittlungseinrichtung.

Die Menge der allgemein zur Verfügung stehenden Informationen nimmt in letzter Zeit rasant zu. Dies bringt es mit sich, dass die Bedeutung von Konzepten für den Zugriff auf Informationen oder die Übermittlung bzw. Vermittlung von Informationen ständig zunimmt. Informationen werden heute häufig über ein Datenübermittlungssystem, in welchem mit Hilfe geeigneter Vermittlungseinrichtungen automatisch Vermittlungsprozesse durchgeführt werden können, übermittelt. Derartige Datenübermittlungssysteme, wie das Internet oder ein organisationsinternes Intranet, sind Kommunikationsnetze, welche aus einer Anzahl von an beliebigen Standorten positionierten Rechnern bzw. Servern bestehen. Die Nutzer solcher Datenübermittlungssysteme sind in der Regel mittels entsprechend ausgestatteter Endgeräte, z.B. mit geeigneten Schnittstellenkarten ausgestatteten Terminals, PCs, Laptops, Mobilfunkgeräten, PDAs etc., an das System angeschlossen und können über die Endgeräte beliebige Daten an das System übermitteln oder aus dem System abrufen. Derartige Datenübermittlungssysteme - insbesondere das Internet - werden in den letzten Jahren in zunehmendem Maße auch zum Handel von Waren und Dienstleistungen verwendet. Dabei können sich zum einen die Anbieter von Waren oder Dienstleistungen auf "Web-Seiten" präsentieren, welche technisch beispielsweise auf einem am Datenübermittlungssystem angeschlossenen bzw. zu dem Datenübermittlungssystem gehörenden Server des Anbieters selbst oder eines Providers des Anbieters implementiert sind. Die potentiellen Kunden (im Folgenden auch Nachfrager genannt) können diese Web-Seiten über das Datenübermittlungssystem aufrufen und sich so über den Anbieter bzw. seine Angebote informieren bzw. direkt Waren oder Dienstleistungen ordern.

Sofern ein Nachfrager eine bestimmte Ware oder Dienstleistung sucht, besteht zum einen die Möglichkeit, als eine einfache Vermittlungseinrichtung eine so genannte "Suchmaschine" zu verwenden, welche anhand von angegebenen Suchbegriffen, d.h. in diesem Fall den Nachfragedaten, alle gefundenen Web-Seiten aufführt, welche mit diesen Suchbegriffen korreliert sind. Zum anderen kann ein Nachfrager auch für einen solchen Zweck vorgesehene Vermittlungseinrichtungen innerhalb des Daten-übermittlungssystems nutzen. Hierbei handelt es sich um spezielle Einrichtungen, welche meistens in Form von Softwaremodulen auf einem oder mehreren vernetzten Servern implementiert sind und welche im Wesentlichen dazu dienen, auf der einen Seite Angebotsdaten der verschiedensten Anbieter einer bestimmten Ware oder Dienstleistung und auf der anderen Seite Nachfragedaten der einzelnen Nachfrager zu präsentieren, miteinander zu vergleichen und für eine möglichst reibungslose Vermittlung von Anbietern und Nachfragern zu sorgen. Solche Vermittlungseinrichtungen werden wegen ihrer Funktion ähnlich eines realen Marktplatzes auch als "virtuelle Marktplätze" bezeichnet.

Derartige virtuelle Marktplätze werden beispielsweise in der WO 97/26612 A1 beschrieben. In dieser Schrift wird mittels eines Agentensystems auf verschiedene Marktplätze zugegriffen. Dabei ist jedem Nutzer ein persönlicher Agent zugeordnet. Unter einem Softwareagenten ist hierbei eine Einrichtung zu verstehen, welche in der Lage ist, verschiedene delegierte elektronische Aktionen für den Nutzer oder einen anderen Agenten durchzuführen. Der Vorteil dieses Agentensystems besteht unter anderem darin, dass mit Hilfe der Agenten ein Nachfrager anonym auf verschiedensten Märkten tätig sein kann, um verschiedenste Produkte zu vergleichen und zu bewerten und Produkte zu kaufen.

In der WO 02/06990 A1 werden speziell ein Verfahren und ein System zur Abfrage medizinischer Informationen aus dem Internet beschrieben. Dabei wird nach Webseiten gesucht, in denen medizinische Informationen abgespeichert sind. Die Adressen (z. B. ein URL) dieser Webseiten werden in einer Datenbank abgespeichert, auf die Nutzer der Datenbank zugreifen können. Mit den Adressen der Webseiten wird jeweils ein ID-Code in der Datenbank abgespeichert, der die medizinische Information bezüglich ihres Inhaltes klassifiziert.

Weiterhin gibt es spezielle Systeme, die anfragenden Personen einen geeigneten Experten vermitteln, der die jeweiligen Fragen beantworten können sollte. Dabei werden die Experten auf Grund ihrer vorherigen Arbeiten, durch Referenzen von dritter Seite und/oder auf Basis ihrer bisherigen Ausbildung bewertet. Beispiele hierfür werden in der GB 2 357 675 A oder der US 5,862,223 beschrieben.

Ein grundsätzliches Problem aller bisher bekannten Vermittlungseinrichtungen tritt jedoch dann auf, wenn es sich bei der Ware, für welche der Nachfrager einen passenden Anbieter sucht, um wertvolle Informationen wie beispielsweise mit großem Aufwand beschaffte und zusammengestellte demographische Informationen, Patientendaten, Informationen über gewerbliche Schutzrechte etc. handelt. Anders als bei einem materiellen Produkt wie z. B. einem Fernseher, Computer oder auch einer bestimmten bekannten Software ist hier der Umfang und die Qualität dessen, was der Nachfrager bei einem Kauf letztendlich vom Anbieter erhält, nicht von vornherein offensichtlich. Vor einem Abschluss des Handels möchte daher in der Regel der Nachfrager möglichst genau wissen, welche Informationen er mit welcher Qualität vom Anbieter erhalten kann, um sicherzustellen, dass es sich auch um die von ihm gewünschten Informationen handelt. Andererseits kann der Anbieter die Informationen nicht bereits vor einer verbindlichen Vereinbarung über den Handel an den Nachfrager übermitteln bzw. den Vermittlungseinrichtungen allgemein zur Verfügung stellen, weil die Informationen nur solange einen Wert haben, wie sie nicht allgemein bekannt sind und nicht jederzeit vom Nachfrager auch ohne eine Zahlung an den Anbieter beschafft werden können. Bei einer Nutzung der oben genannten Vermittlungseinrichtungen zum Auffinden von Informationsanbietern sind die Nachfrager derzeit darauf angewiesen, dass sie dem Anbieter vertrauen, beispielsweise da sie den Anbieter bereits von vorherigen Informationskäufen kennen oder von anderen Nachfragern Empfehlungen für diesen Anbieter erhalten haben.

Es ist Aufgabe der vorliegenden Erfindung, ein Verfahren zur Zulassung eines Informationsanbieters zu einem Verfahren zur Vermittlung von Informationen und eine Vermittlungseinrichtung anzugeben, durch welche einem Informationsnachfrager ein effizienter Zugriff auf Informationen, die den Bedürfnissen des Informationsnachfragers entsprechen, ermöglicht wird.

Diese Aufgabe wird durch ein Verfahren gemäß Patentanspruch 1 und durch eine Vermittlungseinrichtung gemäß Patentanspruch 11 gelöst. Vorteilhafte und zweckmäßige Weiterbildungen der Erfindung sind in den abhängigen Ansprüchen angegeben. Die Erfindung umfasst auch Weiterbildungen der Vorrichtungsansprüche, die den abhängigen Verfahrensansprüchen entsprechen.

Erfindungsgemäß werden hierbei Messwerte enthaltende Test-Daten von einem Informationsanbieter an die Vermittlungseinrichtung übermittelt und von der Vermittlungseinrichtung empfangen, wobei die Test-Daten von dem jeweiligen Informationsanbieter angebotene Informationen repräsentieren. Die Qualität der Test-Daten wird durch die Vermittlungseinrichtung bewertet, und der Informationsanbieter in Abhängigkeit von der Qualität der Test-Daten durch die Vermittlungseinrichtung zu dem Verfahren zur Vermittlung von Informationen zwischen Informationsanbietern und Informationsnachfragern zugelassen. Dabei wird geprüft, ob die Test-Daten Hintergrundinformationen enthalten, welche die Entstehung der Messwerte und/oder Rahmenbedingungen der Messungen beschreiben.

Es werden also nur solche Informationsanbieter bzw. nur Informationen von solchen Informationsanbietern zu dem Verfahren zur Vermittlung von Informationen zugelassen, die durch die Bereitstellung von Test-Daten gezeigt haben, dass die entsprechenden angebotenen Informationen bzw. Daten eine ausreichend hohe Qualität aufweisen.

Die Bewertung der Qualität der Test-Daten und die davon abhängige Zulassung von Informationsanbietern kann insbesondere durch eine Sicherheitsschicht, welche in der Vermittlungseinrichtung, durch die Vermittlungseinrichtung oder verbunden mit der Vermittlungseinrichtung realisiert ist, verwirklicht werden. Diese Sicherheitsschicht bildet dabei zugleich eine neutrale Maklerinstanz. Dadurch kann verhindert werden, dass schon vor einer Vermittlung von Informationen ein Informationsnachfrager einen insbesondere kostenlosen Zugriff auf Informationen erhält. Zudem wird durch die Erfindung erreicht, dass an dem Vermittlungsverfahren teilnehmende Informationsnachfrager sich auf eine vorgegebene Qualität der angebotenen Informationen verlassen können, ohne selbst aufwändige Bewertungsverfahren für die Qualität der Informationen entwickeln und anwenden zu müssen.

Die Zulassung eines Informationsanbieters zu dem Verfahren zur Vermittlung von Informationen bezieht sich insbesondere auf eine erstmalige Zulassung eines bis dahin der Vermittlungseinrichtung unbekannten Informationsanbieters. Es ist aber auch der Fall von der Erfindung umfasst, dass die Zulassung eines der Vermittlungseinrichtung schon bekannten Informationsanbieters mit einem neuen Satz von Informationen von der Bewertung der Qualität von Test-Daten abhängig gemacht wird, welche den neuen Satz von Informationen repräsentieren.

Für die Bewertung der Qualität von Test-Daten können je nach Art der Test-Daten verschiedene Kriterien und Verfahren benutzt werden. So weisen beispielsweise Daten aus dem medizinischen Bereich dann eine gute Qualität auf, wenn sie für statistische Erhebungen zum Zwecke der medizinischen oder pharmazeutischen Forschung geeignet sind. Dies erfordert, dass die Test-Daten nicht nur Messwerte, sondern auch Hintergrundinformationen, welche die Entstehung der Messwerte bzw. die Rahmenbedingungen der Messungen beschreiben, enthalten. Beispielsweise weisen Blutdruckmesswerte nur dann eine gute Qualität auf, wenn mit den Blutdruckmesswerten auch die entsprechende Messzeit zu den Test-Daten gehören. Auch die Angabe der Messmethode, welche beispielsweise von Krankenhaus zu Krankenhaus variieren kann, erhöht die Qualität der Test-Daten und der entsprechenden angebotenen Informationen. Die Angabe von solchen Hintergrundinformationen kann im medizinischen Bereich beispielsweise durch die Angabe der bei der Messung oder der vorangehenden Behandlung angewandten nationalen oder internationalen Standards bzw. Leitlinien erfolgen. Auch das Vorhandensein von Ontologien in den angebotenen Informationen kann auf eine höhere Informationsqualität hinweisen.

Eine Vermittlungseinrichtung kann nun beispielsweise so eingerichtet sein, dass ein Informationsanbieter mit seinen angebotenen Informationen, die sich auf Blutdruckmesswerte beziehen, nur dann zu einem Verfahren zur Vermittlung von Informationen zugelassen wird, wenn die Bewertung der Qualität der von ihm vorab übermittelten Test-Daten ergibt, dass diese auch die Messzeiten enthalten.

Um zu ermöglichen, dass das erfindungsgemäße Verfahren durch einen Informationsanbieter ausgelöst werden kann, ist vorzugsweise vorgesehen, dass Angebotssignalisierungsdaten, welche von einem Informationsanbieter an die Vermittlungseinrichtung übermittelt wurden, empfangen werden, und als Reaktion darauf Testanforderungsdaten von der Vermittlungseinrichtung an den Informationsanbieter gesendet werden.

Vorzugsweise wird das erfindungsgemäße Verfahren mit einem Verfahren zur Vermittlung von Informationen zwischen Informationsanbietern und Informationsnachfragern über eine Vermittlungseinrichtung kombiniert, bei dem Informationsnachfragedaten, welche von Informationsnachfragern an die Vermittlungseinrichtung übermittelt wurden, empfangen werden, und bei dem Informationsangebotsdaten empfangen werden, welche von einem zugelassenen Informationsanbieter an die Vermittlungseinrichtung übermittelt wurden, und welche von dem jeweiligen Informationsanbieter angebotene Informationen repräsentieren. Die Informationsnachfragedaten und die Informationsangebotsdaten können dann zur Ermittlung von korrespondierenden Informationsnachfragedaten und Informationsangebotsdaten miteinander verglichen werden, und Suchergebnisdaten an ein Endgerät eines Informationsnachfragers übermittelt werden, sofern die Informationsnachfragedaten des Informationsnachfragers mit den Informationsangebotsdaten eines Informationsanbieters korrespondieren.

Die Informationsangebotsdaten enthalten vorzugsweise nur einige Parameter, die darauf hinweisen, welche Informationen angeboten werden. Beispielsweise können die Informationsangebotsdaten aussagen, dass Daten zu einer bestimmten Krankheit zur Verfügung stehen, ggf. aus welchem Zeitraum diese Daten stammen und wie viele Daten zur Verfügung stehen. Die Informationsangebotsdaten sollten dabei vorzugsweise einerseits so umfangreich sein, dass ein sinnvoller Vorvergleich mit Informationsnachfragedaten der einzelnen Informationsnachfrager durchgeführt werden kann, andererseits.dürfen diese Informationsangebotsdaten nicht zu viel über die tatsächlich angebotenen Informationen verraten, da die Informationen ja den eigentlichen Wert darstellen.

Bei den Suchergebnisdaten kann es sich dabei vorzugsweise um eine Liste der mit den Informationsnachfragedaten korrespondierenden Informationsangebotsdaten handeln, die beispielsweise die Titel der angebotenen Informationen bzw. der Informationsangebotsdaten, die Namen der Informationsanbieter, die Preise der angebotenen Informationen, die Bewertungen bzw. das Bewertungsranking der Qualitäten der angebotenen Informationen, die Bewertungen bzw. das Bewertungsranking der Anbieter und/oder Bewertungshistorien umfasst.

Um eine sichere Vermittlung insbesondere von sensiblen personenbezogenen oder wertvollen Informationen bzw. Daten zu ermöglichen, erfolgt die Übermittlung von Test-Daten, Informationsangebotsdaten, Informationsnachfragedaten und/oder Suchergebnisdaten zwischen dem jeweiligen Sender und Empfänger bevorzugt verschlüsselt.

Zur langfristigen und damit aussagekräftigeren Bewertung von Informationsanbietern und den von diesen angebotenen Informationen wird die Zulassung des Informationsanbieters durch die Vermittlungseinrichtung zu dem Verfahren zur Vermittlung von Informationen zwischen Informationsanbietern und Informationsnachfragern vorzugsweise von einer Bewertungshistorie des Informationsanbieters abhängig gemacht. Die Bewertungshistorie kann dabei insbesondere auf zurückliegenden Bewertungen der Qualität von Test-Daten basieren, welche in der Vermittlungseinrichtung zugeordnet zu dem entsprechenden Informationsanbieter abgespeichert worden sind.

Alternativ oder ergänzend dazu kann die Bewertungshistorie auch auf zurückliegenden Bewertungen der Qualität von Informationen durch Informationsnachfrager, an welche die Informationen vermittelt wurden, basieren. Hierzu kann die Bewertung der Qualität von dem Informationsnachfrager an die Vermittlungseinrichtung übermittelt werden und in der Vermittlungseinrichtung zugeordnet zum entsprechenden Informationsanbieter abgespeichert werden.

Die Erfindung umfasst auch eine Vermittlungseinrichtung, welche neben einer Anbieter-Test-Schnittstelleneinrichtung zum Empfang von Messwerte enthaltenden Test-Daten, welche von einem Informationsanbieter an die Vermittlungseinrichtung übermittelt wurden, und welche von dem Informationsanbieter angebotene Informationen repräsentieren, eine Bewertungseinrichtung aufweist, die ausgebildet ist, die Qualität von Test-Daten zu bewerten, wobei geprüft wird, ob die Test-Daten Hintergrundinformationen enthalten, welche die Entstehung der Messwerte und/oder Rahmenbedingungen der Messungen beschreiben. Zudem umfasst die Vermittlungseinrichtung eine Steuereinheit, die derart ausgebildet ist, dass die Zulassung des Informationsanbieters zu dem Vermittlungssystem von der Qualität der Test-Daten abhängig gemacht wird.

Das Vermittlungssystem weist vorzugsweise den verschiedenen Informationsnachfragern jeweils zugeordnete Nachfrager-Funktionseinheiten auf, um die Informationsnachfragedaten der Informationsnachfrager zunächst zu empfangen und automatisch an die Vermittlungseinrichtung weiterzuleiten. Umgekehrt können diese Nachfrager-Funktionseinheiten die von der Vermittlungseinrichtung für den betreffenden Informationsnachfrager ausgesendeten Suchergebnisdaten empfangen und die in den Suchergebnisdaten enthaltenen Informationsangebotsdaten und/oder Daten über den Informationsanbieter vor der Übermittlung an den Informationsnachfrager bzw. dessen Endgerät sortieren und normieren. Insbesondere können auf diese Weise Preisangaben normiert werden, um dem Nachfrager einen Vergleich der unterschiedlichen Angebote zu erleichtern. Die Nachfrager-Funktionseinheiten können hierbei in ähnlicher Weise aufgebaut sein und ähnliche Funktionalitäten aufweisen wie die persönlichen Agenten in der eingangs erwähnten WO 97/26612.

In gleicher Weise können den verschiedenen Informationsanbietern jeweils Anbieter-Funktionseinheiten zugeordnet sein, um die Informationsangebotsdaten der zugeordneten Informationsanbieter zunächst zu empfangen und automatisch an die Vermittlungseinrichtung weiterzuleiten. Diese Anbieter-Funktionseinheiten können auch die von der Vermittlungseinrichtung übermittelten, zu den Informationsangebotsdaten des Informationsanbieters passenden Informationsnachfragedaten empfangen und den detaillierten Vergleich mit den durch die Informationsangebotsdaten repräsentierten Informationen durch die zugehörige Datenvergleichseinrichtung veranlassen. Auch diese Anbieter-Funktionseinheiten können in ähnlicher Form wie die bereits genannten persönlichen Softwareagenten aufgebaut sein.

Die den einzelnen Informationsanbietern zugeordneten Datenvergleichseinrichtungen können im Prinzip auch Komponenten der Vermittlungseinrichtung sein. In diesem Fall muss es sich jedoch um einen besonders gesicherten Bereich handeln, so dass die einzelnen Anbieter dort ihre Informationen hinterlegen können, ohne dass andere diese Informationen einsehen können. Bei den den einzelnen Informationsanbietern zugeordneten Datenvergleichseinrichtungen kann es sich im Prinzip auch um eine Anzahl von Datenvergleichseinrichtungen - im Extremfall nur eine einzelne Datenvergleichseinrichtung - handeln, welche den einzelnen Informationsanbietern nur temporär für den jeweiligen Vergleichseinsatz zugeordnet werden.

Besonders bevorzugt sind die Datenvergleichseinrichtungen jedoch jeweils Bestandteil der den betreffenden Informationsanbietern zugeordneten Anbieter-Funktionseinheiten und/oder lokal bei den betreffenden Informationsanbietern, d. h. auf einem dort angeordneten Server bzw. Endgerät installiert. Dies hat den Vorteil, dass die wertvollen Informationen vom Informationsanbieter nicht herausgegeben werden müssen, sondern immer im Einflussbereich des Informationsanbieters bleiben. In diesem Fall sollte jedoch vorzugsweise sichergestellt sein, dass die Datenvergleichseinrichtungen selbst bzw. der Ablauf des Vergleichs nur der Kontrolle des Vermittlungssystems bzw. der Vermittlungseinrichtung unterliegen und nicht von den Informationsanbietern manipuliert werden können. Dadurch ist ein objektiver Vergleich der angebotenen Informationen mit den Informationsnachfragedaten des Nachfragers gewährleistet.

Die Erfindung wird im Folgenden unter Hinweis auf die beigefügten Figuren anhand eines Ausführungsbeispiels näher erläutert. Es stellen dar:
Figur 1 schematische Darstellung eines automatischen Vermittlungssystems,
Figur 2 Ablaufdiagramm eines. Verfahrens zur Zulassung eines Informationsanbieters zu einem Verfahren zur Vermittlung von Informationen.

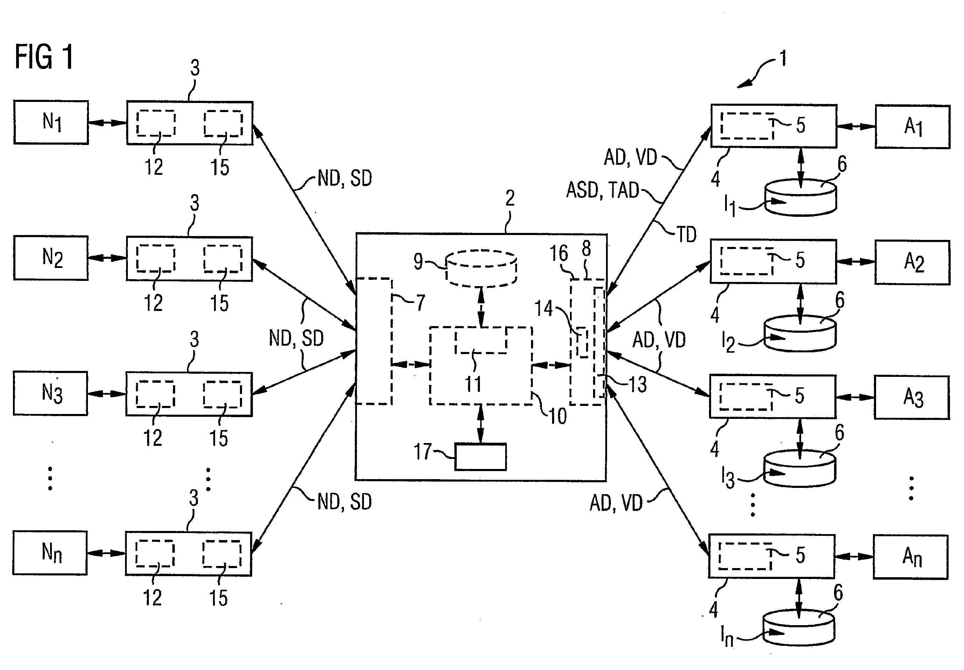

Zentrale Komponente des in Figur 1 dargestellten automatischen Vermittlungssystems 1 ist eine Vermittlungseinrichtung 2. Diese Vermittlungseinrichtung 2 kann beispielsweise auf einem oder mehreren vernetzten Servern in Form von Hardware und/oder Software - vorzugsweise jedoch zum überwiegenden Teil in Form von Softwaremodulen - installiert sein. Im Prinzip kann es sich hierbei auch um einen bereits auf einem Internet-Server implementierten virtuellen Marktplatz oder dergleichen handeln, welcher zusätzlich die nachfolgend beschriebenen Komponenten bzw. Softwaremodule aufweist oder, sofern er bereits über solche Funktionalitäten verfügt, diese in der nachfolgend beschriebenen erfindungsgemäßen Weise nutzt.

Es ist klar, dass die Vermittlungseinrichtung 2 noch weitere Komponenten und Funktionalitäten aufweisen kann, über die virtuelle Marktplätze oder ähnliche Vermittlungseinrichtungen in der Regel verfügen. Auf derartige Standardkomponenten und -funktionen wird jedoch in der folgenden Beschreibung und in den Figuren nicht weiter eingegangen.

Die Vermittlungseinrichtung 2 weist eine Nachfrager-Schnittstelleneinrichtung 7 auf, über die von den Informationsnachfragern N₁ bis Nₙ Informationsnachfragedaten ND empfangen werden.

Die Kommunikation zwischen den Informationsnachfragern N₁ bis Nₙ und der Vermittlungseinrichtung 2 erfolgt über zum Vermittlungssystem 1 gehörige Nachfrager-Funktionseinheiten 3. Diese Nachfrager-Funktionseinheiten 3, im Folgenden auch Nachfrager-Agenten 3 genannt, können als Softwaremodule beispielsweise auf einem der Server implementiert sein, auf denen auch die Vermittlungseinrichtung 2 implementiert ist. Alternativ können die Nachfrager-Agenten 3 auch als Softwaremodule auf einem Endgerät des jeweiligen Informationsnachfragers N₁ bis Nₙ implementiert sein.

Als untergeordnete Softwaremodule enthält ein solcher Nachfrager-Agent 3 zum einen eine Anonymisierungseinheit 12, welche die vom Informationsnachfrager N₁ bis Nₙ eingegebenen Informationsnachfragedaten ND zunächst anonymisiert, bevor sie an die Vermittlungseinrichtung 2 weitergeleitet werden, und zum anderen ein Datenaufbereitungsmodul 15, um Suchergebnisdaten, die nach einer erfolgreichen Suche von der Vermittlungseinrichtung an den Informationsnachfrager N₁ bis Nₙ übermittelt werden sollen, aufzubereiten, beispielsweise nach Anbietern zu sortieren oder bezüglich der Preisgestaltung zu normieren. Somit kann der Informationsnachfrager N₁ bis Nₙ die einzelnen Informationsangebote relativ komfortabel miteinander vergleichen.

Die Vermittlungseinrichtung 2 weist in dem dargestellten Ausführungsbeispiel außerdem eine Steuereinrichtung 10 auf, welche in Form eines Softwaremoduls auf einem Server implementiert ist. Teil dieser Steuereinheit 10 ist eine Vorvergleichseinheit 11 in Form eines Softwaremoduls zum Vergleich von Informationsnachfragedaten ND und Informationsangebotsdaten AD auf Übereinstimmung. Außerdem enthält die Vermittlungseinrichtung 2 einen Speicher 9, um dort die Informationsnachfragedaten ND und die Informationsangebotsdaten AD zwischenzuspeichern.

Die Vermittlungseinrichtung 2 weist zudem eine Anbieter-Schnittstelleneinrichtung 8 auf, um von verschiedenen Informationsanbietern A₁ bis Aₙ Informationsangebotsdaten AD zu empfangen. Ähnlich wie bei den Informationsnachfragern N₁ bis Nₙ erfolgt auch hier die Kommunikation mit den Informationsanbietern A₁ bis Aₙ über Anbieterfunktionseinheiten 4, im Folgenden auch Anbieter-Agenten 4 genannt. Die Anbieter-Agenten 4 sind in Form von Softwaremodulen auf einem Server des betreffenden Informationsanbieters A₁ bis Aₙ installiert.

In dem dargestellten Ausführungsbeispiel weisen die Anbieter-Agenten 4 jeweils eine Datenvergleichseinrichtung 5 in Form eines Software-Untermoduls auf. Diese Datenvergleichseinrichtung 5 dient dazu, von der Vermittlungseinrichtung 2 an den Anbieter-Agenten 4 übermittelte Informationsnachfragedaten ND mit den vom Informationsanbieter A₁ bis Aₙ tatsächlich angebotenen Informationen I₁ bis Iₙ zu vergleichen. Diese Informationen I₁ bis Iₙ sind in einem Speicher 6 hinterlegt, auf welchen der jeweilige Anbieter-Agent 4 Zugriff hat.

Die Anbieter-Agenten 4 und somit auch die Datenvergleichseinrichtung 5 werden bei dem dargestellten Ausführungsbeispiel von einem Agentenmanager 14 der Vergleichseinrichtung 2 automatisch auf dem Server des jeweiligen Informationsanbieters A₁ bis Aₙ installiert. Die Datenvergleichseinrichtung 5 ist dabei so ausgebildet, dass sie nicht vom jeweiligen Informationsanbieter A₁ bis Aₙ verändert werden kann und den Vergleich gemäß den von der Vermittlungseinrichtung 2 bzw. von dem Betreiber der Vermittlungseinrichtung 2 festgelegten Vorgaben durchführt. Durch diese Variante ist einerseits sichergestellt, dass die jeweiligen Informationsanbieter A₁ bis Aₙ ihre wertvollen Informationen I₁ bis In nicht herausgeben müssen und andererseits ein objektiver Vergleich der angebotenen Informationen mit den Informationsnachfragedaten ND der einzelnen Informationsnachfrager N₁ bis Nₙ durchgeführt wird.

Bei dem dargestellten Ausführungsbeispiel weist die Anbieter-Schnittstelleneinrichtung 8 der Vermittlungseinrichtung 2 außerdem ein Anonymisierungsmodul 13 auf, welches von den Informationsanbietern A₁ bis Aₙ an die Vermittlungseinrichtung 2 gesandte Informationsangebotsdaten AD zunächst anonymisiert.

Durch die Anonymisierung ist zumindest während des Vorvergleichs für jede Seite gewährleistet, dass die einzelnen Informationsnachfrager und Informationsanbieter einen passenden "Partner" suchen können, ohne dass allgemein, insbesondere Mitbewerbern, bekannt wird, welche Art von Informationen die einzelnen Informationsnachfrager N₁ bis Nₙ suchen bzw. die Informationsanbieter A₁ bis Aₙ anbieten können.

Neben der Anbieter-Schnittstelleneinrichtung 8 weist die Vermittlungseinrichtung 2 eine Anbieter-Test-Schnittstelleneinrichtung 16 zum Empfang von Test-Daten TD auf, welche von einem Informationsanbieter A₁ an die Vermittlungseinrichtung 2 übermittelt wurden, und welche von dem Informationsanbieter A₁ angebotene Informationen I₁ repräsentieren. Diese Anbieter-Test-Schnittstelleneinrichtung 16 ist zeichnerisch als eine Einheit mit der Anbieter-Schnittstelleneinrichtung 8 dargestellt. Je nach Ausführungsvariante kann aber die Anbieter-Test-Schnittstelleneinrichtung 16 auch als von der Anbieter-Schnittstelleneinrichtung 8 unabhängiges Hardware- bzw. Softwaremodul ausgestaltet sein.

Die Steuereinheit 10 ist außerdem mit einem Bewertungsmodul 17 verbunden, das gemäß einer anderen Ausführungsvariante auch als Teil der Steuereinheit 10 realisiert sein kann. Dieses Bewertungsmodul 17, das als programmgesteuerte Prozessoreinrichtung gebildet sein kann, ist programmtechnisch derart eingerichtet, dass es eine Bewertung insbesondere der Qualität von Test-Daten TD hinsichtlich bestimmter Kriterien durchführen kann. Das Ergebnis der Bewertung wird an die Steuereinheit 10 übermittelt und dient dann als Grundlage einer Entscheidung über die Zulassung eines Informationsanbieters A₁, von dem die Test-Daten TD stammen.

In dem Speicher 9 werden die ermittelten Bewertungen der Qualität von Test-Daten TD unter Zuordnung zu dem Informationsanbieter A₁, von dem die entsprechenden Test-Daten TD stammen, gespeichert, um eine Bewertungshistorie im Speicher 9 zu schaffen. Vorzugsweise kann diese Bewertungshistorie eine ergänzende oder alternative Grundlage einer Entscheidung über die Zulassung eines der Bewertungshistorie zugeordneten Informationsanbieters A₁ sein.

Zur Verschlüsselung der Daten, die zwischen der Vermittlungseinrichtung 2, den Informationsanbietern A₁ bis Aₙ und den Informationsnachfragern N₁ bis Nₙ übermittelt werden, sind an den Nachfragerfunktionseinheiten 3, an den Anbieterfunktionseinheiten 4 und an der Vermittlungseinrichtung 2 zeichnerisch nicht dargestellte Verschlüsselungseinrichtungen vorgesehen.

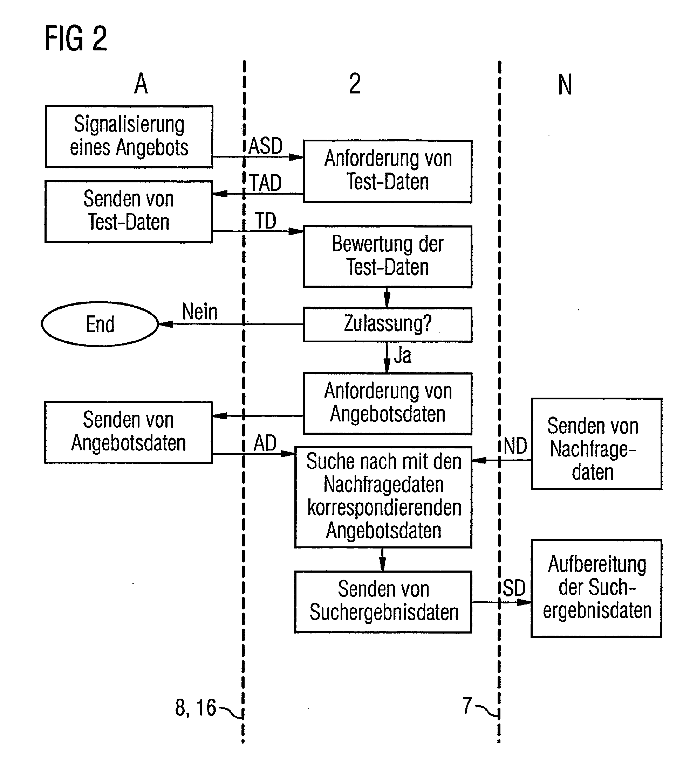

Ein typischer Ablauf eines Verfahrens von der Angebotssignalisierung eines Informationsanbieters bis zur Vermittlung eines Informationsanbieters an einen Informationsnachfrager wird nachfolgend anhand des in Figur 2 dargestellten Flussdiagramms näher erläutert. Die Figur 2 zeigt dabei links von der linken gestrichelten Linie, welche die Anbieter-Schnittstelle 8 und insbesondere die Anbieter-Test-Schnittstelle 16 darstellt, den Ablauf auf der Informationsanbieterseite A, rechts von der rechten gestrichelten Linie, welche die Nachfrager-Schnittstelle 7 darstellt, den Ablauf auf der Informationsnachfragerseite und zwischen den beiden gestrichelten Linien den Ablauf an der Vermittlungseinrichtung 2.

In einem ersten Schritt (Signalisierung eines Angebots) signalisiert in diesem Beispiel eine Klinik als Informationsanbieter A der als Informationsmakler fungierenden Vermittlungseinrichtung 2 durch die Übermittlung von Angebotssignalisierungsdaten ASD, dass sie Daten, die sich auf Blutdruckmesswerte beziehen, zur Vermittlung anzubieten hat. Darauf fordert die Vermittlungseinrichtung 2 durch das Senden von Testanforderungsdaten TAD an die Klinik A von der Klinik A Test-Daten TD an, welche daraufhin von der Klinik A an die Vermittlungseinrichtung 2 gesendet werden.

Ein klassifizierender Eingangsfilter der Vermittlungseinrichtung 2 ist derart eingerichtet ist, dass Daten, die sich auf Blutdruckmesswerte beziehen, an ein Bewertungsmodul 17 weitergeleitet werden. Die Qualität der Test-Daten TD wird dann im nächsten Schritt (Bewertung der Test-Daten) durch das Bewertungsmodul 17 bewertet. In diesem Fall wird überprüft, ob zu den Blutdruckmesswerten auch der jeweilige Messzeitpunkt von den Test-Daten TD umfasst ist. Falls dies der Fall ist, so weisen die Test-Daten TD eine ausreichende Qualität auf, und der Anbieter A wird zu dem Informationsvermittlungsverfahren zugelassen. Falls die Test-Daten TD die Messzeitpunkte nicht aufweisen, so weisen die Test-Daten TD keine ausreichende Qualität auf, und der Anbieter A wird nicht zu dem Informationsvermittlungsverfahren zugelassen. In diesem Fall endet das Verfahren damit, dass der Anbieter A über die Nicht-Zulassung und die Gründe der Nicht-Zulassung informiert wird.

Im Fall der Zulassung der Klinik als Informationsanbieter wird die Klinik aufgefordert, entsprechende Informationsangebotsdaten AD über ihren Anbieter-Agenten 4 an die Vermittlungseinrichtung 2 zu senden (Senden von Angebotsdaten). Diese werden dort in dem Speicher 9 hinterlegt. Diese Informationsangebotsdaten AD enthalten nur einige Parameter, die beschreiben, welche Informationen in welchem Umfang zu welchem Preis angeboten werden.

Parallel zur oder nach der Zulassungsprüfung sucht nun ein Pharmaunternehmen Blutdruckmesswerte und versucht, einen Anbieter, beispielsweise eine Klinik, zu finden, welche über solche Blutdruckmesswerte verfügt. Hierzu erhält auf der Nachfrageseite die Nachfrager-Funktionseinheit 3 die Informationsnachfragedaten ND vom Informationsnachfrager N, hier der Klinik. Diese Nachfrager-Funktionseinheit 3 anonymisiert mit Hilfe ihres Anonymisierungsmoduls 12 die Informationsnachfragedaten ND und sendet dann die anonymisierten Informationsnachfragedaten ND an die Vermittlungseinrichtung 2 weiter (Senden von Nachfragedaten).

Nachdem die Vermittlungseinrichtung 2 die anonymisierten Informationsnachfragedaten ND empfangen hat, werden korrespondierende Informationsangebotsdaten AD gesucht.

Dieser Suchprozess, der in der Zeichnung nicht genauer dargestellt ist, kann folgendermaßen ausgestaltet sein. Im ersten Suchverfahrensschritt sucht die Vermittlungseinrichtung 2 korrespondierende Informationsangebotsdaten AD zunächst im eigenen Datenbestand, d. h. es wird ein Vorvergleich der Informationsnachfragedaten ND mit den im Speicher 9 hinterlegten Informationsangebotsdaten AD der einzelnen Informationsanbieter A₁ bis Aₙ durchgeführt. Fällt dieser Vorvergleich positiv aus und werden passende Informationsangebotsdaten AD gefunden, so werden von der Vermittlungseinrichtung 2 die Informationsnachfragedaten an die Datenvergleichseinrichtung 5 des betreffenden oder der betreffenden Informationsanbieter A₁ bis Aₙ gesendet. Andernfalls erfolgt ein Rücksprung in die Hauptroutine.

Die im Erfolgsfall an die einzelnen Datenvergleichseinrichtungen 5 der potentiellen Informationsanbieter A₁ bis Aₙ gesandten Informationsnachfragedaten ND werden dort mit den tatsächlich angebotenen Informationen I₁ bis In verglichen.
Im konkreten Ausführungsbeispiel, bei dem ein Pharmaunternehmen Blutdruckmesswerte sucht, werden die vom Pharmaunternehmen an die Vergleichseinrichtung 2 gesendeten Informationsnachfragedaten ND an die einzelnen Krankenhäuser verteilt, welche gemäß ihrer Informationsangebotsdaten AD passende Informationen anbieten können. Von den einzelnen Kliniken, in deren Rechnersystemen die Anbieter-Agenten 4 mit den Datenvergleichseinrichtungen 5 installiert sind, wird dann - ohne dass die Blutdruckmesswerte bis zu diesem Zeitpunkt den gesicherten Bereich der Klinik verlassen - ein Vergleich durchgeführt. Dabei werden alle erforderlichen Datentypen, die für das Pharmaunternehmen interessant sein können, einzeln schrittweise durchgegangen, d. h. es werden detailliert die Informationsnachfragedaten ND des Pharmaunternehmens mit den anzubietenden Informationen I₁ bis In verglichen.

Es werden dann die Vergleichsergebnisdaten VD an die Vermittlungseinrichtung 2 zurückgesendet und es erfolgt schließlich ein Rücksprung in die Hauptroutine.

Die Vergleichsergebnisdaten VD enthalten beispielsweise genauere Informationen darüber, inwieweit, ggf. auch genau in welchen Teilen, die jeweiligen Informationen I₁ bis In tatsächlich die Informationsanfrage abdecken, und welche Qualität die jeweiligen Informationen I₁ bis Iₙ aufweisen. Hierbei kann es sich einfach um Werte handeln, die aussagen, dass beispielsweise die Informationsanfrage zu einem bestimmten Prozentsatz befriedigt werden kann, oder es können auch schon genauere Informationen darin enthalten sein, beispielsweise dass die Blutdruckmesswerte auch geschlechtsspezifisch oder nur für bestimmte Altersgruppen, beispielsweise nur für Kinder, zur Verfügung stehen.

Bei einem positiven Vergleichsergebnis, d. h. wenn beispielsweise das Vergleichsergebnis eine Übereinstimmung oberhalb einer vorgegebenen Schwelle erreicht hat, veranlasst die Steuereinheit 10, dass entsprechende Suchergebnisdaten SD an den Nachfrager-Agenten 3 des betreffenden Informationsnachfragers N₁ bis Nₙ zurückgesendet werden (Senden von Suchergebnisdaten).

Innerhalb des Nachfrager-Agenten 3 werden dann mit Hilfe des Datenaufbereitungsmoduls 15 die Suchergebnisdaten SD aufbereitet. So können beispielsweise, wenn die Vermittlungseinrichtung 2 mehrfach erfolgreich war und mehrere Informationsanbieter A₁ bis Aₙ gefunden hat, deren Informationen I₁ bis Iₙ zu den Informationsnachfragedaten ND des jeweiligen Informationsnachfragers passen könnten, die einzelnen Angebote sortiert und ggf. auch normiert werden. Anschließend werden die so aufbereiteten Suchergebnisdaten SD an das Endgerät, in der Regel einen PC oder Server, des Informationsnachfragers N₁ bis Nₙ gesendet.

Dabei können die Suchergebnisdaten SD auch bereits Informationen über den jeweiligen Informationsanbieter enthalten. Eine weitere Variante sieht vor, dass bis zu diesem Zeitpunkt die Informationsanbieter A₁ bis Aₙ noch anonym sind und erst bei Interesse des Informationsnachfragers N₁ bis Nₙ an den jeweiligen Informationen I₁ bis Iₙ ein direkter Kontakt zwischen dem Informationsnachfrager N₁ bis Nₙ und dem betreffenden Informationsanbieter A₁ bis Aₙ, beispielsweise über die Vermittlungseinrichtung 2, hergestellt wird. Weiterhin ist es auch möglich, dass der Austausch der Informationen und die Zahlung vollständig anonym mit Hilfe der Vermittlungseinrichtung 2 durchgeführt werden, wobei in diesem Fall die Vermittlungseinrichtung 2 entsprechend so ausgestattet sein muss, dass sie die erforderlichen Zahlungsfunktionalitäten aufweist, damit der Informationsnachfrager N₁ bis Nₙ die erforderliche Zahlung leistet, bevor er die Informationen I₁ bis Iₙ vom Informationsanbieter A₁ bis Aₙ bzw. von der Vermittlungseinrichtung 2 erhält. Verschiedenste Verfahren, um eine sichere Zahlung über ein Datenübermittlungssystem wie das Internet zu gewährleisten, sind dem Fachmann bekannt.

Abschließend wird noch einmal darauf hingewiesen, dass es sich bei der in den Figuren dargestellten Systemarchitektur und dem Verfahrensablauf lediglich um Ausführungsbeispiele handelt, welche im weiten Umfang vom Fachmann variiert werden können, ohne den Bereich der Erfindung zu verlassen.

So können beispielsweise zur Bewertung von Test-Daten TD eine Vielzahl verschiedener an sich bekannter Verfahren einzeln oder in Kombination verwendet werden. Die Anonymisierungsmodule 12 oder die Datenaufbereitungsmodule 15 können anstelle in den einzelnen Nachfrager-Agenten 3 auch in zentraler Form in der Vermittlungseinrichtung 2 implementiert sein. Umgekehrt kann auch das Anonymisierungsmodul 13 jeweils in Form einzelner Module in den Anbieter-Agenten 4 implementiert sein.

Des Weiteren kann die Vermittlungseinrichtung 2 - anders als in den Figuren dargestellt - z. B. auch separate Nachfrager-Schnittstelleneinrichtungen zum Empfang von Informationsnachfragedaten ND der Informationsnachfrager und zum Versand von Suchergebnisdaten SD an die Endgeräte der betreffenden Informationsnachfrager aufweisen oder entsprechend separate Anbieter-Schnittstelleneinrichtungen 8 zum Empfang von Informationsangebotsdaten AD der Informationsanbieter und zum Versand von Informationsnachfragedaten ND an die Datenvergleichseinrichtungen 5 der verschiedenen Informationsanbieter A₁ bis Aₙ aufweisen.

Das Suchverfahren kann auch komplett zentral in der Vermittlungseinrichtung 2 durchgeführt werden, nachdem die hierfür nötigen Informationen zuvor an die Vermittlungseinrichtung übermittelt wurden.

Anstelle von Blutdruckmesswerten oder Patientendaten zu einem bestimmten Krankheitstypus kann es sich insbesondere auch um demographische Daten, beispielsweise Kundendaten handeln, die ein Unternehmen erwerben möchte, um auf Basis dieser Daten eine Konsumentenanalyse durchzuführen, anhand derer es dann sein eigenes Angebot besser ausrichten kann.

## Patentansprüche

1. Verfahren zur Zulassung eines Informationsanbieters (A₁) zu einem Verfahren zur Vermittlung von Informationen zwischen Informationsanbietern (A₁ bis Aₙ) und Informationsnachfragern (N₁ bis Nₙ) über eine Vermittlungseinrichtung (2) mit folgenden Verfahrensschritten:
- Empfang von Messwerte enthaltenden Test-Daten (TD), welche von einem Informationsanbieter (A₁) an die Vermittlungseinrichtung (2) übermittelt wurden, und welche von dem Informationsanbieter (A₁) angebotene Informationen (I₁) repräsentieren,
- Bewertung der Qualität der Test-Daten (TD) durch die Vermittlungseinrichtung (2) wobei geprüft wird, ob die Test-Daten Hintergrundinformationen enthalten, welche die Entstehung der Messwerte und/oder Rahmenbedingungen der Messungen beschreiben, und
- Zulassung des Informationsanbieters (A₁) durch die Vermittlungseinrichtung (2) zu dem Verfahren zur Vermittlung von Informationen zwischen Informationsanbietern (A₁ bis Aₙ) und Informationsnachfragern (N₁ bis Nₙ) in Abhängigkeit von der Qualität der Test-Daten (TD).

2. Verfahren nach Anspruch 1,
**dadurch gekennzeichnet, dass**
dem Empfang von Test-Daten (TD) folgende Schritte vorgeschaltet sind:
- Empfang von Angebotssignalisierungsdaten (ASD), welche von einem Informationsanbieter (A₁) an die Vermittlungseinrichtung (2) übermittelt wurden,
- Senden von Testanforderungsdaten (TAD) von der Vermittlungseinrichtung (2) an den Informationsanbieter (A₁).

3. Verfahren nach einem der vorhergehenden Ansprüche, **dadurch gekennzeichnet, dass**
das Verfahren zur Vermittlung von Informationen zwischen Informationsanbietern (A₁ bis Aₙ) und Informationsnachfragern (N₁ bis Nₙ) über eine Vermittlungseinrichtung (2) folgende Schritte umfasst:
- Empfang von Informationsnachfragedaten (ND), welche von Informationsnachfragern (N₁ bis Nₙ) an die Vermittlungseinrichtung (2) übermittelt wurden,
- Empfang von Informationsangebotsdaten (AD), welche von einem zugelassenen Informationsanbieter (A₁ bis Aₙ) an die Vermittlungseinrichtung (2) übermittelt wurden, und welche von dem jeweiligen Informationsanbieter (A₁ bis Aₙ) angebotene Informationen (I₁ bis In) repräsentieren,
- Vergleich der Informationsnachfragedaten (ND) und der Informationsangebotsdaten (AD) zur Ermittlung von korrespondierenden Informationsnachfragedaten (ND) und Informationsangebotsdaten (AD), und
- Übermittlung von Suchergebnisdaten (SD) an ein Endgerät eines Informationsnachfragers (N₁ bis Nₙ), sofern die Informationsnachfragedaten (ND) des Informationsnachfragers (N₁ bis Nₙ) mit den Informationsangebotsdaten (AD) eines Informationsanbieters (A₁ bis Aₙ) korrespondieren.

4. Verfahren nach einem der vorhergehenden Ansprüche, **dadurch gekennzeichnet, dass**
die Übermittlung von Test-Daten (TD) und/oder von Informationsangebotsdaten (AD) zwischen einem Informationsanbieter (A₁ bis Aₙ) und der Vermittlungseinrichtung (2) verschlüsselt erfolgt.

5. Verfahren nach einem der Ansprüche 3 oder 4, **dadurch gekennzeichnet, dass**
die Übermittlung von Informationsnachfragedaten (ND) und/oder von Suchergebnisdaten (SD) zwischen einem Informationsnachfrager (N₁ bis Nₙ) und der Vermittlungseinrichtung verschlüsselt erfolgt.

6. Verfahren nach einem der vorhergehenden Ansprüche, **dadurch gekennzeichnet, dass**
die Bewertung der Qualität der Test-Daten (TD) in der Vermittlungseinrichtung (2) zugeordnet zu dem entsprechenden Informationsanbieter (A₁) abgespeichert wird, um eine dem entsprechenden Informationsanbieter (A₁) zugeordnete Bewertungshistorie zu generieren, und
dass die Zulassung des Informationsanbieters (A₁) durch die Vermittlungseinrichtung (2) zu dem Verfahren zur Vermittlung von Informationen zwischen Informationsanbietern (A₁ bis Aₙ) und Informationsnachfragern (N₁ bis Nₙ) von der Bewertungshistorie des Informationsanbieters (A₁) abhängig gemacht wird.

7. Verfahren nach einem der vorhergehenden Ansprüche, **dadurch gekennzeichnet, dass**
die Qualität der an einen Informationsnachfrager (N₁) vermittelten Informationen durch den Informationsnachfrager (N₁) bewertet wird,
dass die Bewertung der Qualität von dem Informationsnachfrager (N₁) an die Vermittlungseinrichtung (2) übermittelt wird und in der Vermittlungseinrichtung (2) zugeordnet zum entsprechenden Informationsanbieter (A₁) abgespeichert wird, um eine dem entsprechenden Informationsanbieter (A₁) zugeordnete Bewertungshistorie zu generieren, und
dass die Zulassung des Informationsanbieters (A₁) durch die Vermittlungseinrichtung (2) zu dem Verfahren zur Vermittlung von Informationen zwischen Informationsanbietern (A₁ bis Aₙ) und Informationsnachfragern (N₁ bis Nₙ) von der Bewertungshistorie des Informationsanbieters (A₁) abhängig gemacht wird.

8. Verfahren nach einem der vorhergehenden Ansprüche, **dadurch gekennzeichnet, dass**
ein Informationsnachfrager (N₁ bis Nₙ) die Informationsnachfragedaten (ND) zunächst an eine dem Informationsnachfrager (N₁ bis Nₙ) zugeordnete Nachfrager-Funktionseinheit (3) übermittelt und die Informationsnachfragedaten (ND) von dort zumindest teilweise automatisch an die Vermittlungseinrichtung (2) weitergeleitet werden, und/oder
dass die Vermittlungseinrichtung (2) die Suchergebnisdaten (SD) an die Nachfrager-Funktionseinheit (3) übermittelt, welche darin enthaltene Informationsangebotsdaten (AD) und/oder zugehörige Informationsanbieterdaten vor einer Übermittlung an den Informationsnachfrager (N₁ bis Nₙ) sortiert und/oder normiert.

9. Verfahren nach einem der vorhergehenden Ansprüche, **dadurch gekennzeichnet, dass**
ein Informationsanbieter (A₁ bis Aₙ) die Informationsangebotsdaten (AD) zunächst an eine dem Informationsanbieter (A₁ bis Aₙ) zugeordnete Anbieter-Funktionseinheit (4) übermittelt, und die Informationsangebotsdaten (AD) automatisch von dort zumindest teilweise an die Vermittlungseinrichtung (2) weitergeleitet werden, und/oder
dass die Vermittlungseinrichtung (2) zu den Informationsangebotsdaten (AD) des Informationsanbieters (A₁ bis Aₙ) passende Informationsnachfragedaten (ND) an die Anbieter-Funktionseinheit (4) übermittelt, welche den detaillierteren Vergleich mit den durch die Informationsangebotsdaten (AD) repräsentierten Informationen (I₁ bis Iₙ) durch die zugehörige Datenvergleichseinrichtung (5) veranlasst.

10. Verfahren nach einem der vorhergehenden Ansprüche, **dadurch gekennzeichnet, dass**
die Bewertung der Qualität und/oder die Bewertungshistorie an den Informationsnachfrager (N₁) übermittelt wird.

11. Vermittlungseinrichtung (2) mit
- einer Anbieter-Test-Schnittstelleneinrichtung (16) zum Empfang von Messwerte enthaltenden Test-Daten (TD), welche von einem Informationsanbieter (A₁) an die Vermittlungseinrichtung (2) übermittelt wurden, und welche von dem Informationsanbieter (A₁) angebotene Informationen (I₁) repräsentieren,
- einer Bewertungseinrichtung (17), die ausgebildet ist, die Qualität von Test-Daten (TD) zu bewerten wobei geprüft wird, ob die Test-Daten Hintergrundinformationen enthalten, welche die Entstehung der Messwerte und/oder Rahmenbedingungen der Messungen beschreiben, und
- einer Steuereinheit (10), die derart ausgebildet ist, dass die Zulassung des Informationsanbieters (A₁) zu einem Verfahren zur Vermittlung von Informationen von der Qualität der Test-Daten (TD) abhängig gemacht wird.

12. Vermittlungseinrichtung (2) nach Anspruch 11 mit
- einer Anzahl von Nachfrager-Schnittstelleneinrichtungen (7) zum Empfang von Informationsnachfragedaten (ND), welche von Informationsnachfragern (N₁ bis Nₙ) an die Vermittlungseinrichtung (2) übermittelt wurden, und zum Versand von Suchergebnisdaten (SD) an Endgeräte der betreffenden Informationsnachfrager (N₁ bis Nₙ),
- einer Anzahl von Anbieter-Schnittstelleneinrichtungen (8) zum Empfang von Informationsangebotsdaten (AD), welche von Informationsanbietern (A₁ bis Aₙ) an die Vermittlungseinrichtung (2) übermittelt wurden, und welche von dem jeweiligen Informationsanbieter (A₁ bis Aₙ) angebotene Informationen (I₁ bis Iₙ) repräsentieren,
- einer Vergleichseinheit (11) zum Vergleich der Informationsnachfragedaten (ND) und der Informationsangebotsdaten (AD) zur Ermittlung von korrespondierenden Informationsnachfragedaten (ND) und Informationsangebotsdaten (AD)
- einer Steuereinheit (10), welche die Übermittlung von Suchergebnisdaten (SD) an das Endgerät eines Informationsnachfragers (N₁ bis Nₙ) veranlasst, sofern die Informationsnachfragedaten (ND) des betreffenden Informationsnachfragers (N₁ bis Nₙ) mit den Informationsangebotsdaten (AD) eines Informationsanbieters (A₁ bis Aₙ) korrespondieren.

13. Vermittlungseinrichtung nach Anspruch 11 oder 12, **gekennzeichnet durch** eine Speichereinrichtung (9) zur Speicherung der Bewertung der Qualität von Test-Daten.

## Claims

1. Method for admitting an information provider (A₁) to a method for switching information between information providers (A₁ to Aₙ) and information seekers (N₁ to Nₙ) via a switching device (2), having the following method steps:
- receiving test data (TD) which contain measurement values and have been transmitted by an information provider (A₁) to the switching device (2) and represent information (I₁) offered by the information provider (A₁),
- evaluation of the quality of the test data (TD) by the switching device (2), in which the test data are tested in order to ascertain whether they contain background information which describes how the measurement values were obtained and/or boundary conditions of the measurements and
- admission of the information provider (A₁) by the switching device (2) to the method for switching information between information providers (A₁ to Aₙ) and information seekers (N₁ to Nₙ) in dependence on the quality of the test data (TD).

2. Method according to Claim 1, **characterized in that** the reception of test data (TD) is preceded by the following steps:
- receiving offer signalling data (ASD) which have been transmitted to the switching device (2) by an information provider (A₁) ,
- sending test request data (TAD) from the switching device (2) to the information provider (A₁).

3. Method according to one of the preceding claims, **characterized in that** the method for switching information between information providers (A₁ to Aₙ) and information seekers (N₁ to Nₙ) via a switching device (2) comprises the following steps:
- receiving information enquiry data (ND) which have been transmitted to the switching device (2) by information seekers (N₁ to Nₙ),
- receiving information offer data (AD) which have been transmitted to the switching device (2) by an admitted information provider (A₁ to Aₙ) and which represent information (I₁ to Iₙ) offered by the respective information provider (A₁ to Aₙ),
- comparing the information enquiry data (ND) and the information offer data (AD) for determining corresponding information enquiry data (ND) and information offer data (AD), and
- transmitting search result data (SD) to a terminal of an information seeker (N₁ to Nₙ) if the information enquiry data (ND) of the information seeker (N₁ to Nₙ) correspond to the information offer data (AD) of an information provider (A₁ to Aₙ).

4. Method according to one of the preceding claims, **characterized in that** test data (TD) and/or information offer data (AD) are transmitted encrypted between an information provider (A₁ to Aₙ) and the switching device (2).

5. Method according to one of Claims 3 or 4, **characterized in that** information enquiry data (ND) and/or search result data (SD) are transmitted encrypted between an information seeker (N₁ to Nₙ) and the switching device.

6. Method according to one of the preceding claims, **characterized in that** the evaluation of the quality of the test data (TD) is stored correlated with the corresponding information provider (A₁) in the switching device (2) in order to generate an evaluation history correlated with the corresponding information provider (A₁), and
that the admission of the information provider (A₁) by the switching device (2) to the method for switching information between information providers (A₁ to Aₙ) and information seekers (N₁ to Nₙ) is made dependent on the evaluation history of the information provider (A₁).

7. Method according to one of the preceding claims, **characterized in that** the quality of the information switched to an information seeker (N₁) is evaluated by the information seeker (N₁),
that the evaluation of the quality is transmitted from the information seeker (N₁) to the switching device (2) and is stored correlated with the corresponding information provider (A₁) in the switching device (2) in order to generate an evaluation history correlated with the corresponding information provider (A₁), and
that the admission of the information provider (A₁) by the switching device (2) to the method for switching information between information providers (A₁ to Aₙ) and information seekers (N₁ to Nₙ) is made dependent on the evaluation history of the information provider (A₁).

8. Method according to one of the preceding claims,
**characterized in that**
an information seeker (N₁ to Nₙ) first transmits the information enquiry data (ND) to an enquirer function unit (3) allocated to the information seeker (N₁ to Nₙ) and the information enquiry data (ND) are automatically forwarded from there at least partially to the switching device (2) and/or
that the switching device (2) transmits the search result data (SD) to the enquirer function unit (3) which sorts or normalizes information offer data (AD) contained therein and/or associated information provider data before they are transmitted to the information seeker (N₁ to Nₙ).

9. Method according to one of the preceding claims,
**characterized in that**
an information provider (A₁ to Aₙ) first transmits the information offer data (AD) to a provider function unit (4) associated with the information provider (A₁ to Aₙ) and the information offer data (AD) are automatically forwarded from there at least partially to the switching device (2), and/or
that the switching device (2) transmits information enquiry data (ND) matching the information offer data (AD) of the information provider (A₁ to Aₙ) to the provider function unit (4) which initiates the more detailed comparison with the information (I₁ to Iₙ) represented by the information offer data (AD) by the associated data comparison device (5).

10. Method according to one of the preceding claims,
**characterized in that**
the evaluation of the quality and/or the evaluation history is transmitted to the information seeker (N₁).

11. Switching device (2) comprising
- a provider test interface device (16) for receiving test data (TD) which contain measurement values and were transmitted to the switching device (2) by an information provider (A₁) and represent information (I₁) offered by the information provider (A₁),
- an evaluation device (17) which is constructed for evaluating the quality of test data (TD) in which the test data are tested in order to ascertain whether they contain background information which describes how the measurement values were obtained and/or boundary conditions of the measurements, and
- a control unit (10) which is constructed in such a manner that the admission of the information provider (A₁) to a method for switching information is made dependent on the quality of the test data (TD).

12. Switching device (2) according to Claim 11, comprising
- a number of enquirer interface devices (7) for receiving information enquiry data (ND) which were transmitted to the switching device (2) by information seekers (N₁ to Nₙ), and for sending search result data (SD) to terminals of the relevant information seekers (N₁ to Nₙ),
- a number of provider interface devices (8) for receiving information offer data (AD) which were transmitted to the switching device (2) by information providers (A₁ to Aₙ) and which represent information (I₁ to Iₙ) offered by the respective information provider (A₁ to Aₙ),
- a comparison unit (11) for comparing the information enquiry data (ND) and the information offer data (AD) for determining corresponding information enquiry data (ND) and information offer data (AD),
- a control unit (10) which causes search result data (SD) to be transmitted to the terminal of an information seeker (N₁ to Nₙ) if the information enquiry data (ND) of the relevant information seeker (N₁ to Nₙ) correspond to the information offer data (AD) of an information provider (A₁ to Aₙ).

13. Switching device according to Claim 11 or 12,
**characterized by** a storage device (9) for storing the evaluation of the quality of test data.

## Revendications

1. Procédé destiné à admettre un fournisseur d'informations (A₁) pour un procédé de transmission d'informations entre des fournisseurs d'informations (A₁ à Aₙ) et des demandeurs d'informations (N₁ à Nₙ) par l'intermédiaire d'un commutateur (2), comprenant
les étapes de procédé suivantes :
- réception de données de test (TD) contenant des valeurs de mesure, lesquelles données de test ont été transmises au commutateur (2) par un fournisseur d'informations (A₁) et lesquelles représentent des informations (I₁) proposées par le fournisseur d'informations (A₁),
- évaluation de la qualité des données de test (TD) par le commutateur (2), avec vérification si les données de test contiennent des informations d'arrière-plan décrivant la formation des valeurs de mesure et/ou des conditions de base des mesures, et
- admission du fournisseur d'informations (A₁) par le commutateur (2) pour le procédé de transmission d'informations entre des fournisseurs d'informations (A₁ à Aₙ) et des demandeurs d'informations (N₁ à Nₙ) en fonction de la qualité des données de test (TD).

2. Procédé selon la revendication 1,
**caractérisé en ce que**
les étapes suivantes précèdent la réception de données de test (TD) :
- réception de données de signalisation de propositions (ASD), lesquelles ont été transmises au commutateur (2) par un fournisseur d'informations (A₁),
- émission de données de demande de test (TAD) au fournisseur d'informations (A₁) par le commutateur (2).

3. Procédé selon l'une quelconque des revendications précédentes, **caractérisé en ce que**
le procédé de transmission d'informations entre des fournisseurs d'informations (A₁ à Aₙ) et des demandeurs d'informations (N₁ à Nₙ) par l'intermédiaire d'un commutateur (2) comprend les étapes suivantes :
- réception de données de demande d'informations (ND), lesquelles ont été transmises au commutateur (2) par des demandeurs d'informations (N₁ à Nₙ),
- réception de données de proposition d'informations (AD), lesquelles ont été transmises au commutateur (2) par un fournisseur d'informations admis (A₁ à Aₙ) et lesquelles représentent des informations (I₁ à Iₙ) proposées par le fournisseur d'informations respectif (A₁ à Aₙ),
- comparaison des données de demande d'informations (ND) et des données de proposition d'informations (AD) pour déterminer des données de demande d'informations (ND) et des données de proposition d'informations (AD) correspondantes, et
- transmission de données de résultat de recherche (SD) à un terminal d'un demandeur d'informations (N₁ à Nₙ), dans la mesure où les données de demande d'informations (ND) du demandeur d'informations (N₁ à Nₙ) correspondent aux données de proposition d'informations (AD) d'un fournisseur d'informations (A₁ à Aₙ).

4. Procédé selon l'une quelconque des revendications précédentes, **caractérisé en ce que**
la transmission de données de test (TD) et/ou de données de proposition d'informations (AD) entre un fournisseur d'informations (A₁ à Aₙ) et le commutateur (2) est réalisée de manière codée.

5. Procédé selon l'une quelconque des revendications 3 ou 4,
**caractérisé en ce que**
la transmission de données de demande d'informations (ND) et/ou de données de résultat de recherche (SD) entre un demandeur d'informations (N₁ à Nₙ) et le commutateur est réalisée de manière codée.

6. Procédé selon l'une quelconque des revendications précédentes, **caractérisé en ce que**
l'évaluation de la qualité des données de test (TD) dans le commutateur (2) est mémorisée en étant attribuée au fournisseur d'informations correspondant (A₁) afin de générer un historique d'évaluation attribué au fournisseur d'informations correspondant (A₁), et
**en ce que** l'admission du fournisseur d'informations (A₁) par le commutateur (2) pour le procédé de transmission d'informations entre des fournisseurs d'informations (A₁ à Aₙ) et des demandeurs d'informations (N₁ à Nₙ) est rendue dépendante de l'historique de l'évaluation du fournisseur d'informations (A₁).

7. Procédé selon l'une quelconque des revendications précédentes, **caractérisé en ce que**
la qualité des informations transmises à un demandeur d'informations (N₁) est évaluée par le demandeur d'informations (N₁),
**en ce que** l'évaluation de la qualité est transmise au commutateur (2) par le demandeur d'informations (N₁) et est mémorisée dans le commutateur (2) en étant attribuée au fournisseur d'informations correspondant (A₁) afin de générer un historique d'évaluation attribué au fournisseur d'informations correspondant (A₁), et
**en ce que** l'admission du fournisseur d'informations (A₁) par le commutateur (2) pour le procédé de transmission d'informations entre des fournisseurs d'informations (A₁ à Aₙ) et des demandeurs d'informations (N₁ à Nₙ) est rendue dépendante de l'historique de l'évaluation du fournisseur d'informations (A₁).

8. Procédé selon l'une quelconque des revendications précédentes, **caractérisé en ce qu'**
un demandeur d'informations (N₁ à Nₙ) transmet les données de demande d'informations (ND) d'abord à une unité fonctionnelle du demandeur (3) attribuée au demandeur d'informations (N₁ à Nₙ) et **en ce que** les données de demande d'informations (ND) sont transférées de là, tout du moins en partie, automatiquement au commutateur (2) et/ou
**en ce que** le commutateur (2) transmet les données de résultat de recherche (SD) à l'unité fonctionnelle du demandeur (3), laquelle classifie et/ou normalise les données de proposition d'informations (AD) qui y sont contenues et/ou les données de fournisseurs d'informations correspondantes avant une transmission au demandeur d'informations (N₁ à Nₙ).

9. Procédé selon l'une quelconque des revendications précédentes, **caractérisé en ce qu'**
un fournisseur d'informations (A₁ à Aₙ) transmet les données de proposition d'informations (AD) d'abord à une unité fonctionnelle du fournisseur (4) attribuée au fournisseur d'informations (A₁ à Aₙ), et **en ce que** les données de proposition d'informations (AD) sont transférées de là, au moins en partie, automatiquement au commutateur (2), et/ou
**en ce que** le commutateur (2) transmet à l'unité fonctionnelle du fournisseur (4) des données de demande d'informations (ND) appropriées aux données de proposition d'informations (AD) du fournisseur d'informations (A₁ à Aₙ), laquelle unité fonctionnelle du fournisseur ordonne la comparaison détaillée avec les informations (I₁ à Iₙ) représentées par les données de proposition d'informations (AD) au moyen du dispositif de comparaison de données correspondant (5).

10. Procédé selon l'une quelconque des revendications précédentes, **caractérisé en ce que**
l'évaluation de la qualité et/ou l'historique de l'évaluation sont transmis au demandeur d'informations (N₁).

11. Commutateur (2) comprenant
- un dispositif d'interface de test de fournisseur (16) destiné à la réception de données de test (TD) contenant des valeurs de mesure, lesquelles données de test ont été transmises au commutateur (2) par un fournisseur d'informations (A₁) et lesquelles représentent des informations (I₁) proposées par le fournisseur d'informations (A₁),
- un dispositif d'évaluation (17) qui est réalisé pour évaluer la qualité de données de test (TD), avec vérification si les données de test contiennent des informations d'arrière-plan décrivant la formation des valeurs de mesure et/ou des conditions de base des mesures, et
- une unité de commande (10) qui est réalisée de manière à ce que l'admission du fournisseur d'informations (A₁) soit rendue dépendante de la qualité des données de test (TD) pour un procédé de transmission d'informations.

12. Commutateur (2) selon la revendication 11, comprenant
- un nombre de dispositifs d'interface de demandeurs (7) destinés à la réception de données de demande d'informations (ND), lesquelles ont été transmises au commutateur (2) par des demandeurs d'informations (N₁ à Nₙ), et destinés à l'émission de données de résultat de recherche (SD) à des terminaux des demandeurs d'informations concernés (N₁ à Nₙ),
- un nombre de dispositifs d'interface de fournisseurs (8) destinés à la réception de données de proposition d'informations (AD), lesquelles ont été transmises au commutateur (2) par des fournisseurs d'informations (A₁ à Aₙ), et lesquelles représentent des informations (I₁ à Iₙ) proposées par le fournisseur d'informations respectif (A₁ à Aₙ),
- une unité de comparaison (11) destinée à comparer les données de demande d'informations (ND) et les données de proposition d'informations (AD) pour déterminer des données de demande d'informations (ND) et des données de proposition d'informations (AD) correspondantes,
- une unité de commande (10), laquelle ordonne la transmission de données de résultat de recherche (SD) au terminal d'un demandeur d'informations (N₁ à Nₙ), dans la mesure où les données de demande d'informations (ND) du demandeur d'informations concerné (N₁ à Nₙ) correspondent aux données de proposition d'informations (AD) d'un fournisseur d'informations (A₁ à Aₙ).

13. Commutateur selon la revendication 11 ou 12, **caractérisé par** un dispositif de mémoire (9) destiné à mémoriser l'évaluation de la qualité de données de test.
